# FASCICULE DE BREVET EUROPEEN

(11) **EP 1 248 511 B1**
(45) Date de publication et mention de la délivrance du brevet: **29.09.2004**
(21) Numéro de dépôt: 00969156.9
(22) Date de dépôt: 01.11.2000
(51) Int. Cl.: A01B 77/00

(54) **MACHINE AGRICOLE POUR LA SEPARATION D'ELEMENTS DU SOL**
LANDWIRTSCHAFTLICHE MASCHINE ZUR ABTRENNUNG VON BODENTEILEN
AGRICULTURAL MACHINERY FOR SEPARATING SOIL ELEMENTS

(30) Priorité: 06.11.1999 CH 203399
(43) Date de publication de la demande: 16.10.2002
(73) Titulaire: Gerber, Roger, 1867 Ollon (CH)
(72) Inventeur: Gerber, Roger, 1867 Ollon (CH)
(74) Mandataire: Besse, François
(86) Numéro de dépôt international: PCT/CH2000/000582
(87) Numéro de publication internationale: WO 2001/033937

(56) Documents cités:
- DE-B- 1 632 780
- GB-A- 216 653
- GB-A- 1 589 710
- US-A- 1 328 697
- US-A- 3 493 266

## Description

La présente invention se rapporte aux machines agricoles, appelées communément séparateurs, tamiseuses ou épierreuses-émotteuses, qui sont utilisées pour la séparation d'éléments du sol, tels que pierres, mottes ou racines (voir p. ex. US-A-1 328 697).

Les documents US-A-4548275 et GB-A-2238219 décrivent des séparateurs qui comprennent au moins une bande transporteuse à claire-voie au travers de laquelle des éléments du sol, inférieurs à une certaine taille, peuvent passer et retourner sur le sol, les éléments de taille supérieure étant acheminés jusqu'à l'extrémité de la bande transporteuse pour être déversés dans des sillons ou éventuellement pour être récupérés dans un récipient.

Le document US-A-5671839 décrit une bande transporteuse à claire-voie qui peut être utilisée avec un séparateur tel que décrit précédemment.

La séparation d'éléments du sol peut être également réalisée au moyen d'un ensemble de cylindres séparés les uns des autres d'une distance qui correspond sensiblement à la taille maximale des éléments qui retournent sur le sol. A titre illustratif de ce deuxième type de séparation, on se référera également au document GB-A-2238219.

Les cylindres de séparation peuvent également avoir une section dont la forme ressemble sensiblement à une étoile. Les machines CombiStar CS 1500/CS 1700 de la société GRIMME peuvent être munies de ce type de cylindre.

Les machines de l'état de la technique présentent cependant plusieurs inconvénients.

L'usure des moyens de séparation (bande transporteuse, cylindres, etc...) est assez rapide à cause de la charge élevée qui est imposée par la masse d'éléments à séparer.

Cette même charge ne permet pas en outre de travailler à des vitesses de transport élevées, ce qui entraîne un processus de séparation relativement long.

Par ailleurs, si une séparation efficace est recherchée, il importe d'avoir des moyens de séparation qui soient répartis une grande distance, d'où la nécessité d'avoir recours à un séparateur relativement long, donc plus difficilement maîtrisable.

Les séparateurs utilisant une bande transporteuse du type de celle décrite dans le document US-A-5671839 présentent en outre l'inconvénient majeur de ne pas produire une granulométrie satisfaisante.

En effet, lors du déplacement de la masse d'éléments sur la bande transporteuse, le broyage des mottes - qui se produit dans tous les cas, avec ou sans contre-chaîne - résulte en un dépôt de terre sur la surface des tiges. Ce phénomène de « collage » a pour effet de réduire l'espacement entre les tiges de sorte que seuls des éléments de faible taille peuvent retourner sur le sol. Ce fin tamisage n'est pas souhaité car il peut résulter en la formation d'une masse de terre compacte, sorte de ciment qui prive le sol d'une aération nécessaire.

A relever que ce problème ne peut être réglé aisément en prévoyant un espacement entre les tiges qui soit supérieur à celui de la taille des éléments qui doivent retourner sur le sol. Si l'on procédait de la sorte, des pierres de diamètre relativement élevé pourraient alors également retourner sur le sol, ce qui rendrait ce dernier inadapté à sa culture.

La présente invention présente entre autres l'avantage de remédier aux problèmes précités.

Elle se rapporte à un séparateur tel que revendiqué comprenant les éléments suivants :
- un cadre adapté pour être tiré par un tracteur ou déplacé de façon indépendante
- des moyens de transport et de séparation liés au cadre pour le transport et la séparation des éléments
- des moyens d'élévation portés par le cadre et placés à l'avant de celui-ci, lesdits moyens d'élévation étant adaptés pour élever une couche du sol dont les éléments doivent être séparés puis acheminés sur les moyens de transport et de séparation
- des moyens de réception situés vers l'arrière du séparateur pour recevoir, optionnellement diriger, les éléments retenus par les moyens de transport et de séparation
ledit séparateur étant caractérisé par le fait qu'il comprend :
- des premiers moyens de transport et de séparation constitués d'une bande transporteuse à claire-voie qui reçoivent initialement les éléments à séparer pour en retenir que ceux qui sont supérieurs à une taille déterminée R et les acheminer vers les moyens de réception
- des seconds moyens de transport et de séparation constitués d'une bande transporteuse à claire-voie, disposés au-dessous desdits premiers moyens, qui reçoivent les éléments de taille inférieure à R qui n'ont pas été retenus par lesdits premiers moyens, retiennent les éléments de taille supérieure à S et les acheminent vers les moyens de réception.

Il va de soi que la taille S est inférieure à R.

Ainsi, seuls les éléments de taille inférieure à S retournent-ils sur la partie du sol située au dessous des moyens de transport et de séparation.

Les éléments de taille supérieure à R sont acheminés par les premiers moyens vers l'arrière du séparateur pour être déversés dans des sillons ou être récupérés dans un récipient. De façon similaire, les éléments dont la taille se situe entre R et S sont acheminés par les seconds moyens vers l'arrière du séparateur pour être déversés dans des sillons ou dans un récipient qui, par exemple, peut être le même que celui décrit dans l'alinéa précédent.

Les premiers et seconds moyens de transport et de séparation sont constitués d'une bande transporteuse à claire-voie. Une telle bande peut être du type décrit dans US-A-5671839.

Outre le fait que pour une efficacité de séparation déterminée, le séparateur selon l'invention est plus compact que ceux de l'état de la technique, il présente le mérite de réduire considérablement l'usure des moyens de transport et de séparation.

En effet, comme on vient de le voir, les éléments extraits du sol sont tout d'abord acheminés sur les premiers moyens de transport et de séparation. Tous les éléments de taille inférieure à R peuvent traverser les premiers moyens et se retrouver sur les deuxièmes moyens. Ainsi, la charge élevée imposée par la masse des éléments est-elle rapidement répartie sur les deux moyens de transport et de séparation, l'usure des moyens de transport et de séparation étant par conséquent considérablement réduite.

Dû à l'allègement de la charge sur les moyens de transport et de séparation, il est possible de faire défiler ceux-ci plus rapidement, ce qui résulte en une réduction de la durée du procédé de séparation.

Alternativement, pour une vitesse donnée, la présente invention permet de réduire la consommation d'énergie par rapport celle requise pour les séparateurs de l'état de la technique.

A relever en outre que pour les séparateurs dont les seconds moyens de séparation et de transport sont constitués d'une bande transporteuse à claire-voie, la présente invention permet de réduire de manière notable, voire totalement, le problème du « collage » mentionné précédemment.

En effet, le broyage des mottes qui, pour mémoire est la cause du « collage », se produit essentiellement au niveau des premiers moyens de séparation et de transport.

La masse d'éléments qui est transférée sur la bande transporteuse des seconds moyens ne subit alors qu'un faible broyage, voire pas de broyage du tout. L'espacement des tiges étant pas conséquent maintenu, la granulométrie recherchée également. Dans le cas de figure qui vient d'être décrit, il va sans dire que le broyage au niveau des premiers moyens de transport et de séparation peut résulter en une diminution de la taille des éléments qui sont autorisés à traverser les premiers moyens. Cela ne porte toutefois pas préjudice à la granulométrie recherchée pour les éléments qui retournent sur le sol car la taille maximale des éléments autorisés à traverser les premiers moyens est bien supérieure, au moins de l'ordre de 40 % dans la plupart des cas, à celle des éléments qui sont autorisés à traverser les seconds moyens.

La granulométrie des éléments qui retournent au sol peut être définie encore plus précisément en ajoutant des moyens pour faire varier la vitesse de défilement des bandes transporteuses. La vitesse de chaque bande peut être réglée indépendamment de celle de l'autre bande.

Les moyens pour faire varier la vitesse des bandes peuvent se présenter sous la forme d'un potentiomètre que l'on peut régler soit à distance depuis le tracteur, soit directement sur la machine agricole, à proximité des bandes transporteuses.

A noter par ailleurs que l'objet de la présente invention peut être intégré à des machines de l'état de la technique. A titre d'exemple d'une telle machine, on peut citer celle qui est décrite dans la demande suisse No 1999 0075/99 déposée également par l'auteur de la présente invention.

A relever enfin que la machine agricole selon l'invention peut être conçue de façon à être repliée, principalement au niveau de sa largeur, ceci afin d'en faciliter son transport sur route.

Un mode de réalisation de l'invention sera décrit ci-après au moyen des figures suivantes :
La figure 1 illustre un séparateur selon l'invention vu de côté
La figure 2 représente un agrandissement d'une partie de la figure 1
La figure 3 représente un agrandissement d'une partie de la figure 2

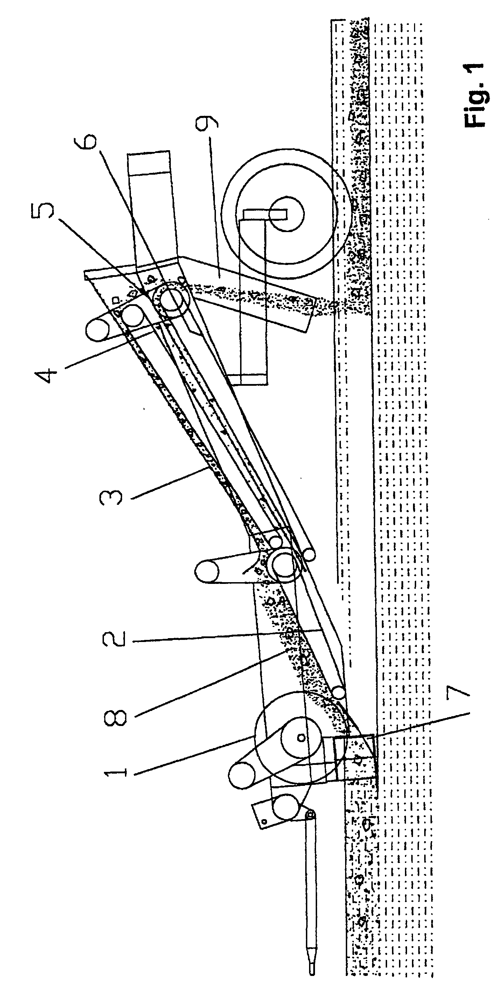

Comme on peut le remarquer à la figure 1, le séparateur comprend une lame inclinée (7) pour la découpe et l'acheminement d'une couche de terre (8) dans le séparateur, ce dernier étant constitué d'une première bande transporteuse à claire-voie (4) disposée au-dessus d'une deuxième bande transporteuse à claire-voie (6). Les deux bandes transporteuses (4,6) sont formées d'une pluralité de tiges perpendiculaires au sens de la marche du séparateur et distancées les unes des autres de façon à laisser passer des éléments inférieurs à une taille R au niveau de la première bande transporteuse (4) et inférieurs à une taille S au niveau de la deuxième bande transporteuse (6). Le séparateur est en outre muni d'une troisième bande transporteuse à claire-voie (2) située entre la lame inclinée (7) et les première et deuxième bandes (4,6). Une contre-chaîne (3) est disposée au-dessus de la première bande transporteuse (4). Des conduits déflecteurs (9) sont enfin placés vers les extrémités des première et deuxième bandes (4,6).

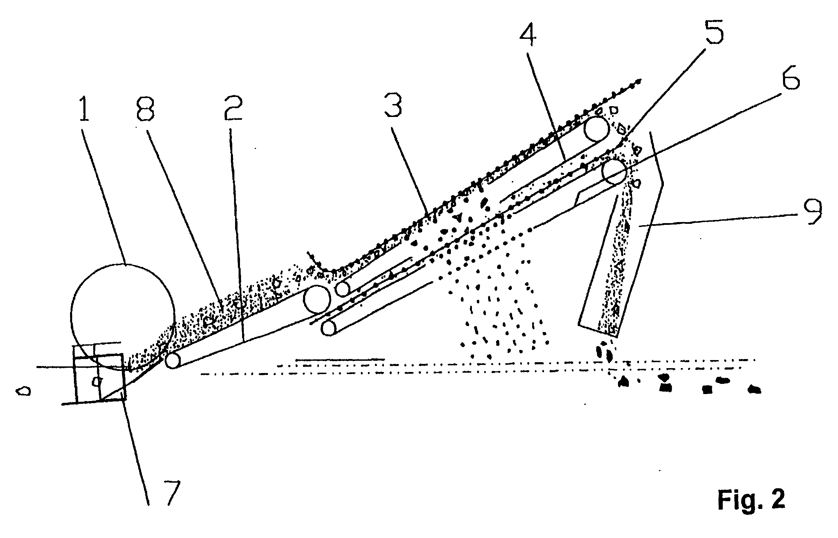

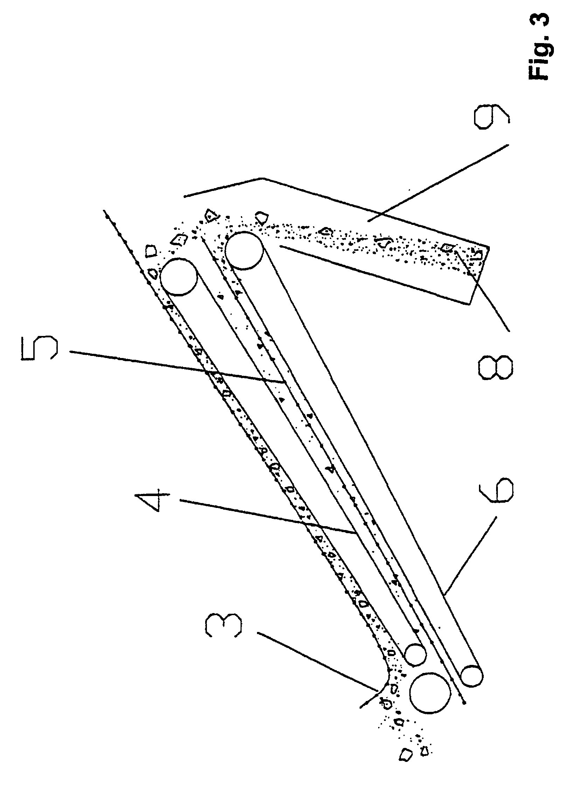

Lorsque le séparateur est en fonctionnement (voir également les figures 2 et 3), une couche de terre (8) est découpée par la lame inclinée (7) pour être acheminée sur la troisième bande (2) où une première séparation grossière a lieu. Les éléments restants sont alors acheminés sur la première bande (4), la contre-chaîne (3) permettant de réduire la taille d'éléments friables (p.ex. des mottes). Les éléments de taille supérieure à une taille déterminée , 36 mm par exemple, ne peuvent traverser la première bande (4) et sont par conséquent acheminés au bout de la bande (4) dans les conduits déflecteurs (9) et sont déversés dans des sillons situés de chaque côtés du séparateur.

Les éléments de taille inférieure passent entre les tiges de la première bande (4) et sont reçus sur la deuxième bande (6). De façon similaire à l'étape précédente, les éléments de taille supérieure à une taille déterminée, par exemple 26 mm, ne peuvent traverser la deuxième bande (6) et sont par conséquent acheminés au bout de la bande (6) dans les conduits déflecteurs (9) et sont déversés dans des sillons situés de chaque côtés du séparateur.

Les éléments de taille inférieure, par exemple inférieure à 26 mm, retournent dans le sol qui se trouve sous les bandes transporteuses (2,4 et 6).

La présente invention comprend également des séparateurs dans lesquels plus de deux bandes transporteuses à claire-voie sont superposées.

## Revendications

1. Machine agricole pour la séparation d'éléments extraits du sol, tels que pierres, mottes ou racines, comprenant les éléments suivants :
- un cadre adapté pour être tiré par un tracteur ou déplacé de façon indépendante
- des moyens de transport et de séparation (2,4,6) liés au cadre pour le transport et la séparation des éléments
- des moyens d'élévation (7) portés par le cadre et placés à l'avant de celui-ci, lesdits moyens d'élévation (7) étant adaptés pour élever une couche du sol (8) dont les éléments doivent être séparés puis acheminés sur les moyens de transport et de séparation (2,4,6)
- des moyens de réception (9) situés vers l'arrière de la machine pour recevoir, optionnellement diriger, les éléments retenus par les moyens de transport et de séparation (2,4,6)
ladite machine agricole étant **caractérisée par le fait que** lesdits moyens de transport et de séparation (2,4,6) comprennent :
- une première bande transporteuse à claire-voie (4) conçue de façon à recevoir des éléments extraits du sol et de façon à retenir et transporter vers lesdits moyens de réception (9) les éléments qui ne peuvent passer au travers de ladite première bande (4),
- une deuxième bande transporteuse à claire-voie (6), disposée au-dessous de ladite première bande (4), conçue de façon à recevoir les éléments extraits du sol ayant passé au travers de ladite première bande (4) et de façon à retenir et transporter vers lesdits moyens de réception (9) les éléments qui ne peuvent passer au travers de ladite deuxième bande (6) et de façon à ne laisser passer que les éléments de taille inférieure aux éléments ayant passé au travers de la première bande (4).

2. Machine agricole selon la revendication précédente **caractérisée par le fait qu'**elle est munie d'une contre-chaîne (3) disposée à une distance déterminée au-dessus de la première bande (4), ladite contre-chaîne (3) permettant de morceler les éléments friables de grande taille.

3. Machine agricole selon l'une quelconque des revendications précédentes **caractérisée par le fait qu'**elle comprend des moyens pour faire varier, de façon indépendante l'une par rapport à l'autre, la vitesse de défilement des deux bandes transporteuses (4,6).

## Patentansprüche

1. Landmaschine zur Trennung von aus dem Boden extrahierten Elementen, wie zum Beispiel Steinen, Klumpen oder Wurzeln, mit den folgenden Elementen:
- einem Rahmen, der zum Ziehen durch einen Schlepper oder unabhängigen Bewegen ausgeführt ist,
- Transport- und Trennmitteln (2, 4, 6), die zum Transportieren und Trennen der Elemente mit dem Rahmen verbunden sind,
- Hubmitteln (7), die von dem Rahmen getragen werden und an dessen vorderen Teil angeordnet sind, wobei die Hubmittel (7) zum Anheben einer Erdschicht (8) ausgeführt sind, deren Elemente getrennt und dann auf Transport- und Trennmittel (2, 4, 6) befördert werden sollen,
- Aufnahmemitteln (9), die sich zum rückwärtigen Teil der Maschine hin befinden und durch die Transport- und Trennmittel (2, 4, 6) festgehaltene Elemente aufnehmen und wahlweise umlenken sollen,
**dadurch gekennzeichnet, dass** die Transport- und Trennmittel (2, 4, 6) Folgendes umfassen:
- ein erstes gitterartiges Transportband (4), das zur Aufnahme von aus dem Boden extrahierten Elementen und zum Festhalten und Transportieren der Elemente, die nicht durch das erste Band (4) passen, zu den Aufnahmemitteln (9) hin, konzipiert ist,
- ein zweites gitterartiges Transportband (6), das unter dem ersten Band (4) angeordnet und zur Aufnahme von aus dem Boden extrahierten Elementen, die durch das erste Band (4) passiert sind, und zum Festhalten und Transportieren der Elemente, die nicht durch das zweite Band (6) passen, zu den Aufnahmemitteln (9) hin, sowie so konzipiert ist, dass es nur Elemente durchlässt, die kleiner sind als die durch das erste Band (4) passierten Elemente.

2. Landmaschine nach dem vorhergehenden Anspruch, **dadurch gekennzeichnet, dass** sie mit einer Gegenkette (3) versehen ist, die in einem bestimmten Abstand über dem ersten Band (4) angeordnet ist und das Zerstückeln großer bröckeliger Elemente gestattet.

3. Landmaschine nach einem der vorhergehenden Ansprüche, **dadurch gekennzeichnet, dass** sie Mittel umfasst, die dazu bestimmt sind, die Laufgeschwindigkeit der beiden Transportbänder (4, 6) bezüglich einander unabhängig voneinander zu ändern.

## Claims

1. Agricultural machine for separating elements extracted from the soil, such as stones, clods or roots, comprising the following elements:
- a frame suitable for being towed by a tractor or moved independently,
- conveyance and separation means (2, 4, 6) connected to the frame for the conveyance and separation of the elements
- elevation means (7) supported by the frame and placed in front of the latter, the said elevation means (7) being suitable for elevating a layer of the soil (8) from which the elements are to be separated and then conveyed on the conveyance and separation means (2, 4, 6)
- receiving means (9) situated towards the rear of the machine to receive, optionally direct, the elements retained by the conveyance and separation means (2, 4, 6)
the said agricultural machine being **characterized in that** the said conveyance and separation means (2, 4, 6) comprise:
- a first openwork conveyor (4) designed so as to receive elements extracted from the soil and to retain and convey to the said receiving means (9) the elements which cannot pass through the said first conveyor (4),
- a second openwork conveyor (6), disposed below the said first conveyor (4), designed so as to receive the elements extracted from the soil that have passed through the said first conveyor (4) and to retain and convey to the said receiving means (9) the elements which cannot pass through the said second conveyor (6) and to allow through only the elements of a size smaller than the elements that have passed through the first conveyor (4).

2. Agricultural machine according to the preceding claim, **characterized in that** it is furnished with a counterchain (3) placed at a determined distance above the first conveyor (4), the said counterchain (3) being used to break up the large size friable elements.

3. Agricultural machine according to any one of the preceding claims, **characterized in that** it comprises means for varying, independently one from the other, the speed of travel of the two conveyors (4, 6).
